# FASCICULE DE BREVET EUROPEEN

(11) **EP 2 834 876 B1**
(45) Date de publication et mention de la délivrance du brevet: **09.03.2016**
(21) Numéro de dépôt: 13715296.3
(22) Date de dépôt: 11.03.2013
(51) Int. Cl.: H01M 10/44, H01M 10/625, B60H 1/32, B60L 11/18, H01M 10/613, H01M 10/6569, B60W 10/26, B60W 10/30, B60H 1/00, B60L 3/00, B60L 3/04, B60L 1/00, B60L 1/02, B60W 20/00

(54) **PROCÉDÉ DE GESTION DE CHARGE D'UNE BATTERIE DE TRACTION ET DISPOSITIFS CORRESPONDANTS**
VERFAHREN ZUR VERWALTUNG DER LADUNG EINER TRAKTIONSBATTERIE UND ENTSPRECHENDE VORRICHTUNGEN
METHOD OF MANAGING THE CHARGING OF A TRACTION BATTERY AND CORRESPONDING DEVICES

(30) Priorité: 03.04.2012 FR 1253027
(43) Date de publication de la demande: 11.02.2015
(73) Titulaire: Renault S.A.S., 92100 Boulogne-Billancourt (FR)
(72) Inventeur: QUETANT, Eudes, F-78280 Guyancourt (FR); GOUTAL, Virginie, F-78720 La Celle Les Bordes (FR); RIPOLL, Christophe, F-78460 Chevreuse (FR); CHAUVELIER, Eric, F-78320 Le Mesnil Saint Denis (FR)
(86) Numéro de dépôt international: PCT/FR2013/050507
(87) Numéro de publication internationale: WO 2013/150200

(56) Documents cités:
- EP-A1- 1 923 240
- JP-A- 7 132 725
- US-A- 6 097 107

## Description

La présente invention se rapporte de manière générale aux domaines de l'automobile et de l'électrotechnique, et concerne plus précisément un procédé de gestion de la charge électrique d'un véhicule comportant une batterie de traction rechargeable. Ce véhicule est donc un véhicule à propulsion électrique ou hybride.

Un tel véhicule est parfois pourvu d'un chargeur de batterie non isolé, susceptible de faire circuler lors de la charge de la batterie, des courants de fuite qui circulent vers la terre. Or une partie de ces courants de fuite peut être absorbée par une personne touchant la carrosserie du véhicule, qui est alors traversée par un courant de toucher, d'autant plus important que la prise de terre du chargeur est mauvaise, c'est-à-dire que la résistance de terre est importante.

Il est donc souhaitable de diminuer autant que possible ces courants de fuite, dont une partie est générée par les consommateurs du réseau électrique du véhicule. Notamment, lorsque celui-ci est pourvu d'un système de régulation thermique, le compresseur d'un tel système est susceptible de générer lors de son fonctionnement, des courants de fuite vers la terre.

On appelle ici système de régulation thermique tout système permettant de modifier la température d'un organe du véhicule, qu'il s'agisse d'un système de pompe à chaleur permettant de réchauffer l'habitacle du véhicule, d'un système de climatisation ou d'une boucle de régulation thermodynamique permettant de réguler la température de la batterie.

Les courants de fuite générés par le compresseur du système de régulation thermique du véhicule sont d'autant plus importants lorsqu'une charge du véhicule est enclenchée, car les tensions du réseau d'alimentation rechargeant la batterie de traction du véhicule augmentent l'intensité des courants de fuite pouvant transiter dans les capacités de mode commun des différents consommateurs électriques en aval du chargeur. De plus les courants de fuite générés par le compresseur du système de régulation thermique ont une fréquence due à l'électronique de pilotage du compresseur et une intensité telles qu'ils sont susceptibles d'aveugler les mécanismes de protection différentiels mis en oeuvre usuellement lors de la charge du véhicule.

Habituellement, les risques électriques dus au compresseur d'un véhicule sont résolus en améliorant la qualité de la prise de terre du compresseur. C'est le cas par exemple de la demande de brevet japonais JP07132725 qui propose d'améliorer la prise de terre au niveau du compresseur d'un véhicule climatisé. Cette proposition n'est cependant pas très sécurisante car elle ne limite pas l'intensité des courants de fuite dus au compresseur.

On sait également limiter les courants de fuite dus au compresseur d'un système de régulation thermique, en ajoutant des composants électroniques à l'électronique de pilotage du compresseur, comme proposé par exemple dans la demande de brevet japonais JP01243843. Cette façon de limiter les courants de fuite est cependant coûteuse et peut s'avérer parfois très complexe.

Un des buts de l'invention est de remédier à au moins une partie des inconvénients de la technique antérieure en fournissant un procédé de gestion de charge d'une batterie de traction d'un véhicule et des dispositifs associés permettant de recharger électriquement le véhicule en minimisant les risques électriques dus notamment aux courants de fuite du système de régulation thermique du véhicule.

A cette fin, l'invention propose un procédé de gestion de charge d'une batterie de traction d'un véhicule comportant un système de régulation thermique, ledit système de régulation thermique comportant un compresseur, ledit procédé étant caractérisé en ce qu'il comporte une étape de transmission d'information entre un dispositif de pilotage du compresseur et un dispositif de gestion de charge de ladite batterie de traction, avant une étape d'activation du compresseur ou avant une étape d'activation d'un dispositif de charge de ladite batterie de traction.

Grâce à l'invention, le dispositif de gestion de charge ou le dispositif de pilotage du compresseur sont en mesure de tenir compte d'une prochaine étape de charge du véhicule ou d'une prochaine étape d'activation du compresseur, pour limiter les courants de fuite en adoptant une stratégie adéquate. Cette stratégie consiste par exemple en :
- l'isolation électrique du compresseur lors de la charge du véhicule, le compresseur étant alors inhibé,
- ou la temporisation de la charge du véhicule le temps que le compresseur ne soit plus rempli de liquide ce qui permet de diminuer les courants de fuite dus au compresseur.

Selon une caractéristique avantageuse du procédé de gestion de charge selon l'invention, ladite étape de transmission d'information correspond à une étape d'envoi par ledit dispositif de pilotage du compresseur, d'une information représentative d'un état du compresseur, audit dispositif de gestion de charge de la batterie de traction.

La connaissance par le dispositif de gestion de charge de l'état du compresseur lui permet de déterminer quand commencer une recharge électrique du véhicule en minimisant les risques électriques et ainsi de choisir la stratégie optimale de limitation des courants de fuite.

Selon une autre caractéristique avantageuse, le procédé de gestion de charge selon l'invention comporte en outre une étape d'isolation électrique entre ledit compresseur et un réseau d'alimentation extérieur destiné à charger ladite batterie de traction, lorsque ladite information est représentative d'une activation imminente dudit compresseur.

Selon une autre caractéristique avantageuse, le procédé de gestion de charge selon l'invention comporte en outre une étape d'interruption ou de report d'une charge de ladite batterie de traction pendant au moins une première durée prédéterminée, lorsque ladite information est représentative d'une activation imminente dudit compresseur.

Le fait de rendre ainsi l'activation du compresseur prioritaire par rapport à la charge électrique du véhicule est avantageux car la mise en route du compresseur est beaucoup plus rapide que la charge complète d'une batterie de traction. De plus la batterie de traction nécessite en général d'être chauffée ou refroidie par un système de régulation thermique pour être rechargée, et donc la charge du véhicule nécessite souvent la mise en route d'un compresseur.

Selon une autre caractéristique avantageuse, ladite première durée prédéterminée est fonction de la température extérieure et/ou du régime courant du compresseur.

L'interruption ou le report de la charge du véhicule est ainsi limitée au plus près à la durée nécessaire à l'évacuation de la majeure partie du liquide contenu dans le compresseur durant sa mise en route.

Selon une autre caractéristique avantageuse, ladite première durée prédéterminée est incrémentée d'une durée nécessaire à l'atteinte d'une vitesse minimum prédéterminée fonction de la température extérieure, par le moteur dudit compresseur.

Cette incrémentation permet d'utiliser un régime compresseur au moins égal à un régime en-dessous duquel l'évacuation du liquide n'est pas considérée comme réalisable, ce suivant la température extérieure.

Selon une caractéristique avantageuse de l'invention, lorsque ledit compresseur nécessite plusieurs étapes d'activation pour répondre à un besoin du système de régulation thermique, la charge de ladite batterie de traction est ininterrompue après un nombre prédéterminé d'étapes d'activation dudit compresseur.

Cette caractéristique supplémentaire permet, lorsque l'étape d'activation du compresseur est prioritaire sur l'étape d'activation du dispositif de charge du véhicule, de réduire le temps de charge du véhicule et d'éviter une charge saccadée qui nuirait aux composants du dispositif de charge, par exemple lorsque le compresseur présente un défaut de fonctionnement ou lorsque le système de régulation impose au compresseur de réaliser des cycles d'activations et de désactivations.

Selon une autre caractéristique avantageuse, ledit dispositif de pilotage dudit compresseur impose une vitesse minimum au moteur dudit compresseur, cette vitesse minimum étant fonction de la température extérieure.

Cette caractéristique supplémentaire permet encore de réduire le temps de charge du véhicule même lorsque l'étape d'activation du compresseur est prioritaire sur l'étape d'activation du dispositif de charge du véhicule.

Selon une autre caractéristique avantageuse, ladite étape de transmission d'information est suivie d'une étape de temporisation de l'étape d'activation du compresseur pendant une seconde durée prédéterminée, inférieure à ladite première durée prédéterminée, et ledit dispositif de pilotage du compresseur envoie une information représentative d'un état avancé d'activation du compresseur à l'issue de ladite première durée prédéterminée.

Cette caractéristique supplémentaire permet l'implémentation de la logique du procédé de gestion de charge selon l'invention dans le dispositif de pilotage du compresseur, ce qui permet de mieux maîtriser les contraintes dues à la commande du compresseur, qui varient notamment en fonction de la température extérieure, de son état précédent, etc.

Selon une variante de réalisation de l'invention, ladite étape de transmission d'information est précédée d'une étape d'interrogation sur l'état du compresseur par ledit dispositif de gestion de charge, et ladite première durée prédéterminée est supervisée par ledit dispositif de gestion de charge.

Selon cette variante, la logique du procédé de gestion de charge selon l'invention est implémentée dans le dispositif de gestion de charge, ce qui permet de gérer plus facilement la charge du véhicule. En effet dans cette variante le dispositif de gestion de charge communique avec le dispositif de pilotage du compresseur selon un modèle requête/réponse ce qui permet de ne pas gérer de processus logique supplémentaire.

Selon une variante de réalisation de l'invention, ladite étape d'isolation est suivie d'une étape d'inhibition du compresseur jusqu'à la fin d'une étape de charge de la batterie de traction.

Dans cette alternative, l'étape d'activation du dispositif de charge est prioritaire par rapport à l'étape d'activation du compresseur, celui-ci étant isolé électriquement du dispositif de charge pour réduire les courants de fuite dus au compresseur.

L'invention concerne aussi un dispositif de gestion de charge caractérisé en ce qu'il comporte des moyens pour mettre en oeuvre le procédé de gestion de charge selon l'invention.

L'invention concerne encore un dispositif de pilotage d'un compresseur, caractérisé en ce qu'il comporte des moyens pour mettre en oeuvre le procédé de gestion de charge selon l'invention.

L'invention concerne enfin un programme d'ordinateur comportant des instructions pour mettre en oeuvre le procédé de gestion de charge selon l'invention, lorsqu'il est exécuté sur un ou plusieurs processeurs.

Le dispositif de gestion de charge selon l'invention, le dispositif de pilotage d'un compresseur selon l'invention ainsi que le programme d'ordinateur présentent des avantages analogues à ceux du procédé de gestion de charge selon l'invention.

D'autres caractéristiques et avantages apparaîtront à la lecture de modes de réalisation préférés décrits en référence aux figures dans lesquelles :
- la figure 1 représente un véhicule comportant un dispositif de gestion de charge et un dispositif de pilotage d'un compresseur selon l'invention,
- la figure 2 représente des étapes du procédé de gestion de charge selon l'invention, dans un premier mode de réalisation de l'invention,
- la figure 3 représente des étapes du procédé de gestion de charge selon l'invention, dans un deuxième mode de réalisation de l'invention,
- et la figure 4 représente des étapes du procédé de gestion de charge selon l'invention, dans un troisième mode de réalisation de l'invention.

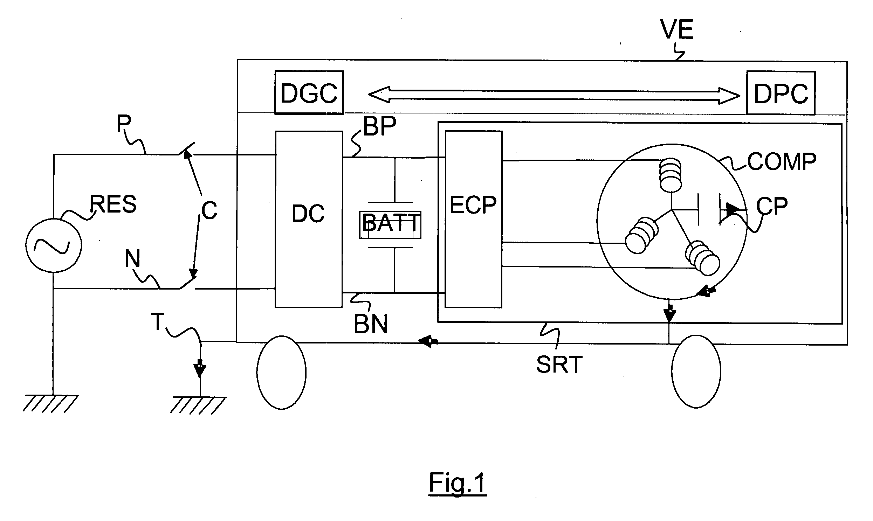

Selon un mode préféré de réalisation de l'invention représenté à la figure 1, un véhicule VE électrique ou hybride comporte une batterie de traction BATT, rechargeable via un dispositif de charge DC, par un réseau d'alimentation électrique RES extérieur. Le dispositif de charge DC comporte des moyens de connexion à une ligne de phase P et à une ligne neutre N du réseau RES, ces moyens de connexion étant munis de contacteurs C permettant d'isoler électriquement le réseau RES et le dispositif de charge DC.

Dans cet exemple d'utilisation de l'invention, le réseau RES est un réseau monophasé, mais le dispositif de charge DC comporte également des moyens de recharge de la batterie BATT par un réseau d'alimentation triphasé ou par un réseau d'alimentation continue.

Le dispositif de charge DC est connecté au réseau haute tension du véhicule VE. Plus précisément les bornes de sortie du dispositif de charge DC sont connectées d'une part à un bus BP lui-même connecté à la borne positive de la batterie BATT, et d'autre part à un bus BN lui-même connecté à la borne négative de la batterie BATT.

Le véhicule VE comporte également un système de régulation thermique SRT comportant lui-même un compresseur COMP. Le moteur du compresseur COMP comporte des bobinages statoriques alimentés par la batterie BATT via une électronique ECP de pilotage du compresseur COMP. L'électronique ECP de pilotage du compresseur COMP est connectée en entrée aux bus BP et BN de la batterie BATT et en sortie aux bobinages statoriques du compresseur COMP.

Lorsque le compresseur COMP est activé, l'électronique ECP de pilotage du compresseur COMP génère des impulsions de commande sur les bobinages statoriques du compresseur COMP, qui sont alors alimentés par un courant triphasé d'une certaine fréquence et d'une certaine intensité. Or les bobinages statoriques du compresseur COMP présentent une capacité parasite CP de couplage au châssis du véhicule VE. Cette capacité parasite CP est donc traversée, lorsque le compresseur COMP est activé, par un courant de fuite dépendant de la fréquence de découpage de l'électronique ECP et de la valeur de la capacité parasite CP. Ce courant de fuite se déverse normalement vers la terre T par le chemin représenté par les flèches noires sur la **figure 1****.**

Or la capacité parasite CP est typiquement de quelques nanofarads, et peut augmenter de plusieurs dizaines de nanofarads lorsque du fluide du système de régulation thermique SRT est concentré à l'état liquide dans le compresseur COMP, ce qui peut être le cas lorsque celui-ci est au repos depuis longtemps. En effet, comme les bobinages statoriques du compresseur COMP sont plongés dans un mélange d'huile et de réfrigérant, la capacité parasite CP varie en grande partie selon le mode de fonctionnement du compresseur, selon la température extérieure et par exemple la quantité d'eau dans le fluide.

Lorsque le compresseur COMP est activé après avoir été longtemps au repos, par exemple pour pré-conditionner l'habitacle du véhicule VE, ou dégivrer la face avant du véhicule, ou encore pour pré-conditionner la batterie BATT en vue de la recharger, et lorsque la charge de la batterie BATT est activée, le courant de fuite dû au compresseur COMP peut reboucler par le réseau d'alimentation RES, si la prise de terre T est défectueuse. Dans ce cas ce courant de fuite est susceptible d'aveugler des dispositifs de protection de la charge du véhicule VE, empêchant la coupure de l'alimentation du dispositif de charge DC même en cas de courant de toucher. Ceci est dû notamment à l'intensité et à la fréquence de ce courant de fuite, non détectées par les mécanismes de protection différentiels usuels.

Le procédé de gestion de charge selon l'invention permet de diminuer les courants de fuite dus au compresseur COMP pendant la charge du véhicule VE, en mettant en oeuvre une ou plusieurs stratégies de charge, implémentées au moins en partie dans un dispositif de gestion de charge DGC selon l'invention et/ou dans un dispositif selon l'invention de pilotage DPC du compresseur COMP. Le dispositif de gestion de charge DGC et le dispositif de pilotage DPC du compresseur COMP communiquent grâce au bus de communication CAN (d'après l'anglais «Controller Area Network ») du véhicule VE. Ces deux dispositifs sont interfacés également à d'autres actionneurs ou calculateurs du véhicule VE par ce bus CAN.

Le dispositif de pilotage DPC du compresseur est réparti entre plusieurs calculateurs dont un calculateur de gestion de la climatisation, un calculateur de gestion de la requête de vitesse du compresseur en fonction des besoins du calculateur de gestion de la climatisation, et la partie actionneur électromécanique ainsi que la carte électronique intégrée du compresseur COMP lui-même. Le dispositif de pilotage DPC du compresseur est donc à la fois électronique et logiciel.

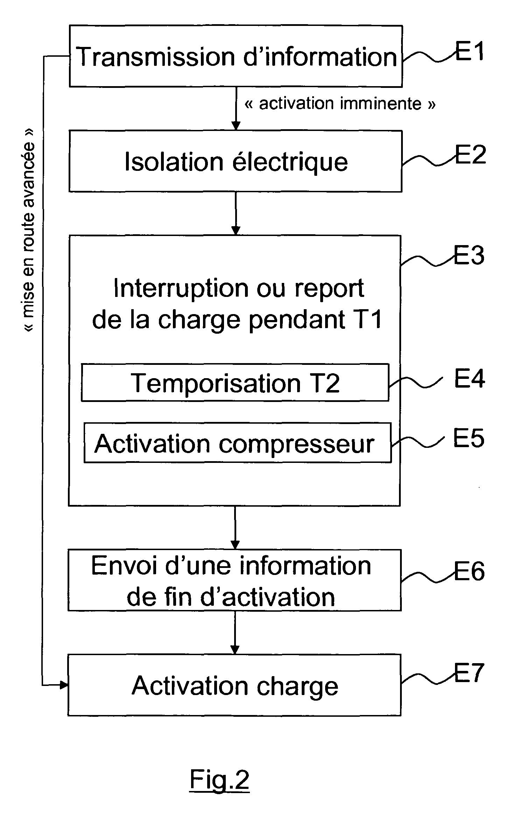

Un premier mode de réalisation du procédé de gestion de charge selon l'invention est représenté à la **figure 2****,** sous forme d'un algorithme comportant des étapes E1 à E7.

Dans ce premier mode de réalisation, le procédé de gestion de charge selon l'invention est implémenté en majeure partie dans le dispositif DPC de pilotage du compresseur COMP. Il limite les courants de fuite dus au compresseur COMP pendant une charge de la batterie BATT, en évacuant la majeure partie du liquide contenu dans le compresseur COMP avant cette charge ou en interrompant la charge avant de mettre en route le compresseur COMP. La valeur de la capacité parasite CP se trouve ainsi fortement diminuée lorsque la batterie BATT est en charge.

On suppose donc, dans ce premier mode de réalisation, qu'une demande d'activation du dispositif de charge DC, envoyée par le dispositif de gestion de charge DGC, ou une demande d'activation du compresseur COMP envoyée par un calculateur du système de régulation thermique SRT, est reçue par le dispositif DPC de pilotage du compresseur COMP, déclenchant le procédé de gestion de charge selon l'invention.

La première étape E1 est la transmission, par le dispositif DPC de pilotage du compresseur COMP, d'une information représentative d'un état du compresseur COMP au dispositif de gestion de charge DGC. Si cette information est représentative d'une mise en route avancée du compresseur COMP, alors le dispositif de gestion de charge DGC active la charge de la batterie BATT selon l'étape E7, la capacité parasite CP du compresseur COMP étant déjà relativement faible. Au contraire si cette information est représentative d'une activation imminente, ou ayant une durée inférieure à une durée spécifiée, du compresseur COMP, alors l'étape suivante est l'étape E2.

L'étape E2 est l'isolation électrique entre le compresseur COMP et le réseau RES. Cette isolation électrique s'effectue par l'ouverture des contacteurs C entre le dispositif de charge DC et le réseau RES. En variante, il s'effectue par l'ouverture de contacteurs entre la batterie BATT et le dispositif de charge DC, ou encore par l'ouverture des interrupteurs d'un étage redresseur ou onduleur du dispositif de charge DC.

L'étape suivante E3 est l'interruption ou le report de la charge de la batterie BATT, par le dispositif de gestion de charge DGC, pendant au moins une première durée prédéterminée T1. Cette première durée prédéterminée T1 est supervisée par le dispositif DPC de pilotage du compresseur COMP, qui met en oeuvre deux sous-étapes pendant cette étape E3 :
- Dans une première sous-étape E4, le dispositif DPC de pilotage du compresseur COMP temporise l'activation du compresseur COMP pendant une deuxième durée prédéterminée T2 d'environ 500 millisecondes permettant au dispositif de gestion de charge DGC de recevoir l'information transmise lors de l'étape E1 et d'interrompre un processus de charge si la batterie BATT était déjà en charge.
- Dans une deuxième sous-étape E5, le dispositif DPC de pilotage du compresseur COMP active le compresseur COMP.

A la fin de la première durée prédéterminée T1, le dispositif DPC de pilotage du compresseur COMP envoie une information représentative d'un état avancé d'activation du compresseur COMP au dispositif de gestion de charge DGC selon une étape E6 du procédé de gestion de charge selon l'invention.

A la réception de cette information représentative d'un état avancé d'activation du compresseur COMP, le dispositif de gestion de charge DGC active ou réactive la charge de la batterie BATT selon l'étape E7. Pour cela les contacteurs C sont refermés.

La première durée prédéterminée T1 vaut entre 2 et 15 secondes approximativement. Elle est calculée de sorte que la majorité de l'éventuel liquide présent dans le compresseur COMP soit évacuée du compresseur COMP, diminuant ainsi significativement la capacité parasite CP du compresseur COMP. Ce calcul est effectué par exemple dynamiquement par le dispositif DPC de pilotage du compresseur COMP en fonction de la température extérieure au véhicule VE et/ou du régime courant du compresseur COMP, c'est-à-dire sa plage de vitesse. En variante le dispositif DPC de pilotage du compresseur COMP détermine la première durée prédéterminée T1 en fonction seulement de la température extérieure, mais n'incrémente le compteur permettant de faire s'écouler la durée T1 que lorsque le compresseur COMP a atteint une vitesse minimum prédéterminée fonction de la température extérieure. Ainsi la première durée prédéterminée T1 est incrémentée d'une durée nécessaire à l'atteinte d'un régime du compresseur COMP sans recourir à des tables ou calculs, tout en interrompant ou en différant la charge de la batterie BATT le moins longtemps possible.

Le dispositif DPC de pilotage du compresseur COMP impose éventuellement une vitesse minimum au moteur du compresseur COMP pour limiter la durée d'interruption ou de report de charge de la batterie BATT. Cette contrainte est par exemple imposée au compresseur COMP quand l'état du compresseur COMP et la température extérieure le permettent.

Le dispositif de pilotage DPC du compresseur COMP interrompant la charge de la batterie BATT lorsque celui-ci se met en route, il peut arriver, par exemple s'il surchauffe ou suivant un besoin de cycles d' activation/désactivation du compresseur commandé par le système de régulation thermique SRT , de nécessiter plusieurs interruptions de charge durant la demande de régulation thermique. Dans ce cas le dispositif de pilotage DPC du compresseur COMP arrête le compresseur COMP au bout d'un nombre prédéterminé d'interruptions de charge, par exemple deux, dues au compresseur COMP, pour laisser la charge de la batterie BATT se dérouler sans interruption.

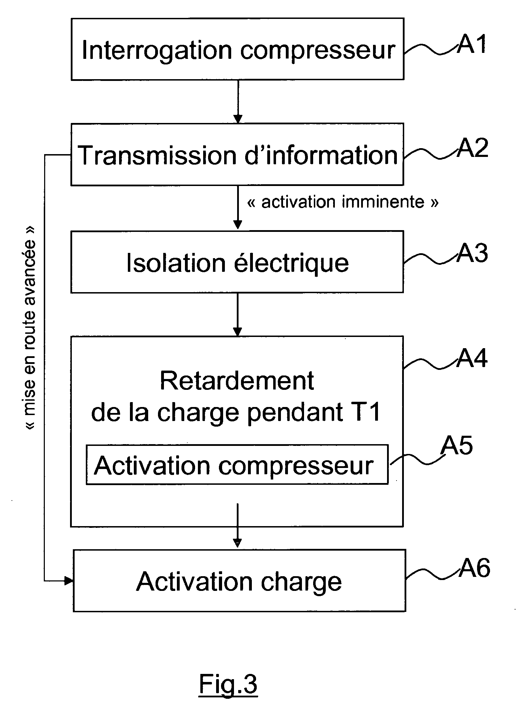

Un deuxième mode de réalisation du procédé de gestion de charge selon l'invention est représenté à la **figure 3****,** sous forme d'un algorithme comportant des étapes A1 à A6.

Dans ce deuxième mode de réalisation, le procédé de gestion de charge selon l'invention est implémenté en majeure partie dans le dispositif DGC de gestion de charge, selon la même stratégie de vidange partielle du compresseur COMP avant ou durant une charge de la batterie BATT que dans le premier mode de réalisation de l'invention.

Dans ce deuxième mode de réalisation, le dispositif de gestion de charge DGC interroge systématiquement le dispositif DPC de pilotage du compresseur COMP avant d'activer la charge de la batterie BATT. On suppose donc, préalablement à la première étape A1 du procédé de gestion de charge selon l'invention, que le dispositif de gestion de charge DGC s'apprête à activer une charge de la batterie BATT de traction. En variante, le dispositif de gestion de charge DGC n'interroge pas systématiquement le dispositif DPC de pilotage du compresseur, et supervise lui-même son interruption pendant une première durée prédéterminée T1. Dans cette variante le procédé de gestion de charge selon l'invention commence par l'étape A2 décrite ci-après.

L'étape A1, selon la variante principale de ce deuxième mode de réalisation de l'invention, est l'interrogation, par le dispositif de gestion de charge DGC, du dispositif DPC de pilotage du compresseur, sur l'état du compresseur COMP.

L'étape suivante A2 est la transmission, par le dispositif DPC du pilotage du compresseur COMP, au dispositif DGC de gestion de charge, d'une information sur l'état du compresseur COMP. Si cette information est représentative d'une mise en route avancée du compresseur COMP, alors le dispositif de gestion de charge DGC active la charge de la batterie BATT selon l'étape A6, la capacité parasite CP du compresseur COMP étant déjà relativement faible. Au contraire si cette information est représentative d'une activation imminente, ou ayant une durée inférieure à une durée spécifiée, du compresseur COMP, alors l'étape suivante est l'étape A3.

L'étape A3 est l'isolation électrique entre le compresseur COMP et le réseau RES. Cette isolation électrique s'effectue de la même façon qu'à l'étape E2, par ouverture de contacteurs, ou d'interrupteurs du dispositif de charge DC.

L'étape suivante A4 est le report de la charge de la batterie BATT, par le dispositif de gestion de charge DGC, pendant au moins une première durée prédéterminée T1. Cette première durée prédéterminée T1 est supervisée par le dispositif de gestion de charge DGC, qui met en oeuvre pendant cette étape A4, une sous-étape A5 d'activation du compresseur COMP, par envoi d'un message d'activation au dispositif DPC de pilotage du compresseur COMP. La première durée prédéterminée T1 doit permettre à la majorité de l'éventuel liquide présent dans le compresseur COMP d'être évacuée du compresseur COMP, diminuant ainsi significativement la capacité parasite CP du compresseur COMP. Elle est par exemple obtenue par le dispositif de gestion de charge DGC par des tables fournissant une valeur de première durée prédéterminée T1 en fonction de la température extérieure.

L'étape suivante A6 est l'activation de la charge de la batterie BATT, à l'issue de la première durée prédéterminée T1.

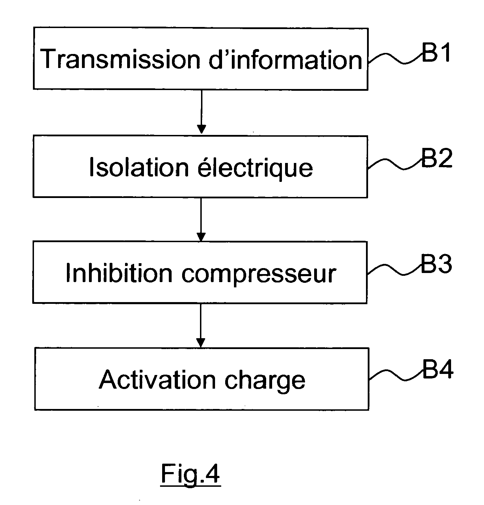

Un troisième mode de réalisation du procédé de gestion de charge selon l'invention est représenté à la **figure 4****,** sous forme d'un algorithme comportant des étapes B1 à B4.

Dans ce troisième mode de réalisation, le procédé de gestion de charge selon l'invention est implémenté en majeure partie dans le dispositif DGC de gestion de charge, selon une stratégie d'arrêt et d'isolation électrique du compresseur COMP systématiquement pendant une charge de la batterie BATT du véhicule VE. Ainsi on s'affranchit des courants de fuite dus au compresseur COMP pendant la charge de la batterie BATT.

On suppose donc, préalablement à une première étape B1 du procédé de gestion charge selon l'invention, que le dispositif de gestion de charge DGC s'apprête à activer une charge de la batterie BATT de traction.

L'étape B1 est la transmission, par le dispositif DGC de gestion de charge, d'une information représentative d'une charge imminente de la batterie BATT, au dispositif DPC de pilotage du compresseur COMP.

L'étape B2 est l'isolation électrique du compresseur COMP par rapport au dispositif DC de charge. Cette isolation est effectuée par exemple par l'ouverture des interrupteurs d'un étage onduleur de l'électronique ECP de pilotage du compresseur COMP.

L'étape B3 est l'inhibition du pilotage du compresseur COMP.

Enfin l'étape B4 est l'activation de la charge de la batterie BATT, par fermeture des contacteurs C notamment. Pendant toute cette étape B4, le compresseur COMP est arrêté privant le véhicule VE des prestations thermiques. Ce troisième mode de réalisation de l'invention, plus radical que les deux premiers pour s'affranchir des courants de fuite dus au compresseur COMP, est donc envisageable seulement lorsque la charge de la batterie BATT peut s'effectuer sans pré-conditionnement de la batterie BATT.

A la fin de l'étape B4, le dispositif DGC de gestion de charge avertit le dispositif DPC de pilotage du compresseur COMP de la fin de la charge pour lui permettre de réactiver le compresseur COMP si nécessaire.

Il est à noter que ces modes de réalisation de l'invention ne sont pas exhaustifs, la communication entre le dispositif DGC de gestion de charge et le dispositif DPC de pilotage du compresseur COMP pouvant être plus ou moins limitée ou au contraire très élaborée. Ainsi l'information transmise lors de la première étape du procédé de gestion de charge selon l'invention est représentative, selon l'implémentation choisie du procédé de gestion de charge selon l'invention :
- d'une activation imminente du compresseur COMP,
- ou bien d'une activation du compresseur COMP ayant une durée inférieure à une durée spécifiée,
- ou bien d'un état avancé d'une activation du compresseur COMP si le dispositif DGC de gestion de charge n'autorise la charge de la batterie BATT qu'après réception d'une telle information,
- ou bien d'une activation imminente d'une charge de la batterie BATT,
- ou bien de la fin d'une charge de la batterie BATT, par exemple si le dispositif DPC de pilotage du compresseur COMP n'autorise l'activation du compresseur COMP qu'après réception d'une telle information.
De plus, il est envisageable d'implémenter l'invention différemment, par exemple il est possible d'intégrer le dispositif DGC de gestion de charge et le dispositif DPC de pilotage du compresseur COMP dans un même calculateur central du véhicule.

## Revendications

1. Procédé de gestion de charge d'une batterie (BATT) de traction d'un véhicule (VE) comportant un système de régulation thermique (SRT), ledit système de régulation thermique (SRT) comportant un compresseur (COMP), ledit procédé étant **caractérisé en ce qu'**il comporte une étape (E1, A2, B1) de transmission d'information entre un dispositif (DPC) de pilotage du compresseur et un dispositif (DGC) de gestion de charge de ladite batterie (BATT) de traction, avant une étape (E5, A5) d'activation du compresseur (COMP) ou avant une étape d'activation (B4) d'un dispositif (DC) de charge de ladite batterie (BATT) de traction.

2. Procédé de gestion de charge selon la revendication 1, **caractérisé en ce que** ladite étape (E1, A2) de transmission d'information correspond à une étape d'envoi par ledit dispositif (DPC) de pilotage du compresseur, d'une information représentative d'un état du compresseur (COMP), audit dispositif (DGC) de gestion de charge de la batterie (BATT) de traction.

3. Procédé de gestion de charge selon la revendication 1 ou 2, **caractérisé en ce qu'**il comporte en outre une étape (E2, A3, B2) d'isolation électrique entre ledit compresseur (COMP) et un réseau d'alimentation extérieur destiné à charger ladite batterie de traction, lorsque ladite information est représentative d'une activation imminente dudit compresseur (COMP).

4. Procédé de gestion de charge selon la revendication 2 ou 3, **caractérisé en ce qu'**il comporte en outre une étape (E3, A4) d'interruption ou de report d'une charge de ladite batterie (BATT) de traction pendant au moins une première durée prédéterminée (T1), lorsque ladite information est représentative d'une activation imminente dudit compresseur (COMP).

5. Procédé de gestion de charge selon la revendication 4, **caractérisé en ce que** ladite première durée prédéterminée (T1) est fonction de la température extérieure et/ou du régime courant du compresseur (COMP).

6. Procédé de gestion de charge selon la revendication 4, **caractérisé en ce que** ladite première durée prédéterminée (T1) est incrémentée d'une durée nécessaire à l'atteinte d'une vitesse minimum prédéterminée fonction de la température extérieure, par le moteur dudit compresseur (COMP).

7. Procédé de gestion de charge selon l'une quelconque des revendications 4 à 6, **caractérisé en ce que** lorsque ledit compresseur (COMP) nécessite plusieurs étapes d'activation pour répondre à un besoin du système de régulation thermique (SRT), la charge de ladite batterie (BATT) de traction est ininterrompue après un nombre prédéterminé d'étapes d'activation dudit compresseur (COMP).

8. Procédé de gestion de charge selon l'une quelconque des revendications 4 à 7, **caractérisé en ce que** ledit dispositif (DPC) de pilotage dudit compresseur impose une vitesse minimum au moteur dudit compresseur (COMP), ladite vitesse minimum étant fonction de la température extérieure.

9. Procédé de gestion de charge selon l'une quelconque des revendications 4 à 8, **caractérisé en ce que** et **en ce que** ladite étape (E3) de transmission d'information est suivie d'une étape (E4) de temporisation de l'étape (E5) d'activation du compresseur (COMP) pendant une seconde durée prédéterminée (T2), inférieure à ladite première durée prédéterminée (T1), et **en ce que** ledit dispositif (DPC) de pilotage du compresseur envoie une information représentative d'un état avancé d'activation du compresseur (COMP) à l'issue de ladite première durée prédéterminée (T1).

10. Procédé de gestion de charge selon l'une quelconque des revendications 4 à 8, **caractérisé en ce que** ladite étape (A2) de transmission d'information est précédée d'une étape d'interrogation (A1) sur l'état du compresseur (COMP) par ledit dispositif (DGC) de gestion de charge, et **en ce que** ladite première durée prédéterminée (T1) est supervisée par ledit dispositif (DGC) de gestion de charge.

11. Procédé de gestion de charge selon la revendication 3, **caractérisé en ce que** ladite étape (B2) d'isolation est suivie d'une étape (B3) d'inhibition du compresseur (COMP) jusqu'à la fin d'une étape (B4) de charge de la batterie (BATT) de traction.

12. Dispositif (DGC) de gestion de charge **caractérisé en ce qu'**il comporte des moyens pour mettre eh oeuvre le procédé de gestion de charge selon la revendication 10 ou 11.

13. Dispositif (DPC) de pilotage d'un compresseur, **caractérisé en ce qu'**il comporte des moyens pour mettre en oeuvre le procédé de gestion de charge selon la revendication 9.

14. Programme d'ordinateur comportant des instructions pour mettre en oeuvre le procédé de gestion de charge selon l'une quelconque des revendications 1 à 11, lorsqu'il est exécuté sur un ou plusieurs processeurs.

## Patentansprüche

1. Verfahren zum Ladungsmanagement einer Traktionsbatterie (BATT) eines Fahrzeugs (VE), welches ein Wärmeregelungssystem (SRT) aufweist, wobei das Wärmeregelungssystem (SRT) einen Verdichter (COMP) aufweist, wobei das Verfahren **dadurch gekennzeichnet ist, dass** es einen Schritt (E1, A2, B1) der Informationsübertragung zwischen einer Vorrichtung (DPC) zur Vorsteuerung des Verdichters und einer Vorrichtung (DGC) zum Ladungsmanagement der Traktionsbatterie (BATT) vor einem Schritt (E5, A5) der Aktivierung des Verdichters (COMP) oder vor einem Schritt der Aktivierung (B4) einer Vorrichtung (DC) zum Laden der Traktionsbatterie (BATT) aufweist.

2. Verfahren zum Ladungsmanagement nach Anspruch 1, **dadurch gekennzeichnet, dass** der Schritt (E1, A2) der Informationsübertragung einem Schritt des Sendens einer Information, die für einen Zustand des Verdichters (COMP) repräsentativ ist, durch die Vorrichtung (DPC) zur Vorsteuerung des Verdichters an die Vorrichtung (DGC) zum Ladungsmanagement der Traktionsbatterie (BATT) entspricht.

3. Verfahren zum Ladungsmanagement nach Anspruch 1 oder 2, **dadurch gekennzeichnet, dass** es außerdem einen Schritt (E2, A3, B2) der elektrischen Trennung zwischen dem Verdichter (COMP) und einem äußeren Versorgungsnetz, das dazu bestimmt ist, die Traktionsbatterie zu laden, aufweist, wenn die Information für eine bevorstehende Aktivierung des Verdichters (COMP) repräsentativ ist.

4. Verfahren zum Ladungsmanagement nach Anspruch 2 oder 3, **dadurch gekennzeichnet, dass** es außerdem einen Schritt (E3, A4) der Unterbrechung oder des Aufschubs eines Ladens der Traktionsbatterie (BATT) während wenigstens einer ersten vorgegebenen Dauer (T1) aufweist, wenn die Information für eine bevorstehende Aktivierung des Verdichters (COMP) repräsentativ ist.

5. Verfahren zum Ladungsmanagement nach Anspruch 4, **dadurch gekennzeichnet, dass** die erste vorgegebene Dauer (T1) von der Außentemperatur und/oder von der aktuellen Betriebsart des Verdichters (COMP) abhängig ist.

6. Verfahren zum Ladungsmanagement nach Anspruch 4, **dadurch gekennzeichnet, dass** die erste vorgegebene Dauer (T1) um eine Dauer inkrementiert wird, die zum Erreichen einer vorgegebenen, von der Außentemperatur abhängigen minimalen Drehzahl durch den Motor des Verdichters (COMP) erforderlich ist.

7. Verfahren zum Ladungsmanagement nach einem der Ansprüche 4 bis 6, **dadurch gekennzeichnet, dass**, wenn der Verdichter (COMP) mehrere Aktivierungsschritte benötigt, um einen Bedarf des Wärmeregelungssystems (SRT) zu erfüllen, das Laden der Traktionsbatterie (BATT) nach einer vorgegebenen Anzahl von Aktivierungsschritten des Verdichters (COMP) ununterbrochen ist.

8. Verfahren zum Ladungsmanagement nach einem der Ansprüche 4 bis 7, **dadurch gekennzeichnet, dass** die Vorrichtung (DPC) zur Vorsteuerung des Verdichters dem Motor des Verdichters (COMP) eine minimale Drehzahl auferlegt, wobei diese minimale Drehzahl von der Außentemperatur abhängig ist.

9. Verfahren zum Ladungsmanagement nach einem der Ansprüche 4 bis 8, **dadurch gekennzeichnet, dass** auf den Schritt (E3) der Informationsübertragung ein Schritt (E4) der Verzögerung des Schrittes (E5) der Aktivierung des Verdichters (COMP) während einer zweiten vorgegebenen Dauer (T2) folgt, die kürzer als die erste vorgegebene Dauer (T1) ist, und dadurch, dass die Vorrichtung (DPC) zur Vorsteuerung des Verdichters am Ende der ersten vorgegebenen Dauer (T1) eine Information sendet, die für einen fortgeschrittenen Zustand der Aktivierung des Verdichters (COMP) repräsentativ ist.

10. Verfahren zum Ladungsmanagement nach einem der Ansprüche 4 bis 8, **dadurch gekennzeichnet, dass** dem Schritt (A2) der Informationsübertragung ein Schritt der Abfrage (A1) über den Zustand des Verdichters (COMP) durch die Vorrichtung (DGC) zum Ladungsmanagement vorangeht, und dadurch, dass die erste vorgegebene Dauer (T1) von der Vorrichtung (DGC) zum Ladungsmanagement überwacht wird.

11. Verfahren zum Ladungsmanagement nach Anspruch 3, **dadurch gekennzeichnet, dass** auf den Schritt (B2) der Trennung ein Schritt (B3) der Blockierung des Verdichters (COMP) bis zum Ende eines Schrittes (B4) des Ladens der Traktionsbatterie (BATT) folgt.

12. Vorrichtung (DGC) zum Ladungsmanagement, **dadurch gekennzeichnet, dass** sie Mittel zur Durchführung des Verfahrens zum Ladungsmanagement nach Anspruch 10 oder 11 umfasst.

13. Vorrichtung (DPC) zur Vorsteuerung eines Verdichters, **dadurch gekennzeichnet, dass** sie Mittel zur Durchführung des Verfahrens zum Ladungsmanagement nach Anspruch 9 umfasst.

14. Computerprogramm, welches Anweisungen zur Durchführung des Verfahrens zum Ladungsmanagement nach einem der Ansprüche 1 bis 11, wenn es auf einem oder mehreren Prozessoren ausgeführt wird, umfasst.

## Claims

1. Method of managing the charging of a traction battery (BATT) of a vehicle (VE) including a heat regulating system (SRT), said heat regulating system (SRT) including a compressor (COMP), said method being **characterized in that** it includes a step (E1, A2, B1) of transmitting information between a control device (DPC) for the compressor and a device (DGC) for managing the charging of said traction battery (BATT), before a step (E5, A5) of activating the compressor (COMP) or before a step (B4) of activating a device (DC) for charging said traction battery (BATT).

2. Method of managing charging according to Claim 1, **characterized in that** said step (E1, A2) of information transmission corresponds to a step in which said compressor control device (DPC) sends information representative of a state of the compressor (COMP) to said device (DGC) for managing the charging of the traction battery (BATT).

3. Method of managing charging according to Claim 1 or 2, **characterized in that** it further includes a step (E2, A3, B2) of providing electrical isolation between said compressor (COMP) and an external supply network intended to charge said traction battery, when said information is representative of an imminent activation of said compressor (COMP).

4. Method of managing charging according to Claim 2 or 3, **characterized in that** it further includes a step (E3, A4) of interrupting or postponing the charging of said traction battery (BATT) for at least a first predetermined duration (T1), when said information is representative of an imminent activation of said compressor (COMP).

5. Method of managing charging according to Claim 4, **characterized in that** said first predetermined duration (T1) is a function of the external temperature and/or the current speed of the compressor (COMP).

6. Method of managing charging according to Claim 4, **characterized in that** said first predetermined duration (T1) is incremented by a duration required by the motor of said compressor (COMP) to reach a predetermined minimum speed which is a function of the external temperature.

7. Method of managing charging according to any of Claims 4 to 6, **characterized in that**, if said compressor (COMP) requires several activation steps to meet a requirement of the heat regulating system (SRT), the charging of said traction battery (BATT) is uninterrupted after a predetermined number of steps of activation of said compressor (COMP).

8. Method of managing charging according to any of Claims 4 to 7, **characterized in that** said control device (DPC) of said compressor sets a minimum speed at the motor of said compressor (COMP), said minimum speed being a function of the external temperature.

9. Method of managing charging according to any of Claims 4 to 8, **characterized in that** said step (E3) of information transmission is followed by a step (E4) of delaying the step (E5) of activating the compressor (COMP) for a second predetermined duration (T2) which is shorter than said first predetermined duration (T1), and **in that** said compressor control device (DPC) sends information representative of an advanced state of activation of the compressor (COMP) at the end of said first predetermined duration (T1).

10. Method of managing charging according to any of Claims 4 to 8, **characterized in that** said step (A2) of information transmission is preceded by a step (A1) of interrogation about the state of the compressor (COMP) by said charging management device (DGC), and **in that** said first predetermined duration (T1) is supervised by said charging management device (DGC).

11. Method of managing charging according to Claim 3, **characterized in that** said step (B2) of isolation is followed by a step (B3) in which the compressor (COMP) is disabled until the end of a step (B4) of charging the traction battery (BATT).

12. Device (DGC) for managing charging, **characterized in that** it includes means for applying the method of managing charging according to Claim 10 or 11.

13. Device (DPC) for controlling a compressor, **characterized in that** it includes means for applying the method of managing charging according to Claim 9.

14. Computer program including instructions for applying the method of managing charging according to any of Claims 1 to 11, when it is run on one or more processors.
